# EUROPEAN PATENT SPECIFICATION

(11) **EP 2 889 233 B1**
(45) Date of publication and mention of the grant of the patent: **14.12.2016**
(21) Application number: 14200638.6
(22) Date of filing: 30.12.2014
(51) Int. Cl.: B65G 1/02, B65D 88/74, B65G 1/04

(54) **An automated or semi-automated storage and retrieval system at differentiated temperatures**
Automatisches oder halbautomatisches Speicher- und Abrufsystem bei differenzierten Temperaturen
Système de stockage et de récupération automatisé ou semi-automatisé à des températures différenciées

(30) Priority: 31.12.2013 IT TO20131102
(43) Date of publication of application: 01.07.2015
(73) Proprietor: Eurofork S.r.l., 10041 Carignano (TO) (IT); Bonetto S.r.l., 10064 Pinerolo (Torino) (IT)
(72) Inventor: Traversa, Maurizio, 10022 Carmagnola (Torino) (IT); Sola, Claudio, 10064 Pinerolo (Torino) (IT)
(74) Representative: Fioravanti, Corrado

(56) References cited:
- EP-A2- 0 328 178
- JP-A- H08 198 383
- JP-A- 2009 050 076
- JP-A- 2011 205 780
- JP-A- 2012 056 659
- JP-U- S59 165 670

## Description

### Technical field

The present invention generally pertains to the field of automated or semi-automated storage of load units. Particularly, the invention relates to an automated or semi-automated system for the storage and retrieval of load units at differentiated temperatures.

### Background art

Many types of goods, particularly in the food industry, require specific conservation conditions, for which the control of environmental parameters such as humidity and temperature is very commonly required. In order to ensure the desired conservation conditions, it is necessary at present to provide climate control of a whole store at a given temperature. This solution, used in the known art, has considerable drawbacks in many respects, particularly as regards the poor or non-existent controllability of any thermal gradient which may be desired, for example, for the conservation of goods at different temperatures.

In the current state of the art, the chosen solution to the problem of conserving goods at a suitable temperature is that of cooling or heating the whole of the warehouse containing the store to constant thermal conditions, set to a single temperature level.

This requires high expenditure in terms of energy and financial resources, since a number of stores equal to the number of desired conservation temperatures must be provided. Furthermore, the energy consumption for the climate control of the environment is at the same level regardless of the volume and quantity of goods to be conserved at the temperature in question. The losses in financial and energy terms increase with a decrease in the ratio between the volume that is actually to be climate-controlled and the volume of the climate-controlled warehouse.

EP 0 328 178 A2 discloses a storage and retrieval system according to the preamble of claim 1.

### Summary of the invention

One object of the present invention is to optimize the ratio between the volumes cooled and/or heated and the goods that are cooled and/or heated, thus making the operating costs quite lower than those of the prior art solutions, while providing greater flexibility in the operation of the store.

Another object of the present invention is to avoid the multiplication of stores which becomes necessary when storage units have to be climate-controlled at different temperatures.

The aforesaid objects and advantages, and others, are achieved, according to one aspect of the invention, by a system having the characteristics defined in Claim 1. Preferred embodiments of the invention are defined in the dependent claims.

Briefly, the shelves of an automated or semi-automated store have horizontal support guides, on which the various load units that may need to be heated or cooled can be placed; the horizontal guides are associated with stationary electrical contacts, interfaced with electrical contacts fixed to the load units that are to be conserved at a temperature other than that of the surrounding environment, for the purpose of supplying electrical power to cooling and/or heating devices associated with said load units. The load units to be heated or cooled are made in such a way that the goods are contained and protected within a closed or closable casing having thermally insulated walls. Thus, since each load unit is thermally insulated from all the others present in the store, and since the load unit is associated with an independent device for cooling or heating the goods contained in the unit, it is unnecessary to provide further climate control of the whole storage environment, and the aforementioned advantages are therefore obtained.

### Brief description of the drawings

The structural and functional characteristics of some preferred embodiments of an automated or semi-automated system according to the invention will now be described.

Reference is made to the attached drawings, in which:
- Fig. 1 is a schematic view of an automated store according to one embodiment of the invention;
- Fig. 2 is a schematic perspective view of a set of load units contained in the store of Fig. 1;
- Fig. 3 is an enlarged schematic perspective view of a detail of Fig. 2;
- Fig. 4 is a schematic front view of a detail of the portion of store of Fig. 3; and
- Fig. 5 is a schematic perspective view of a set of load units contained in the store of Fig. 1, according to a further embodiment.

### Detailed description

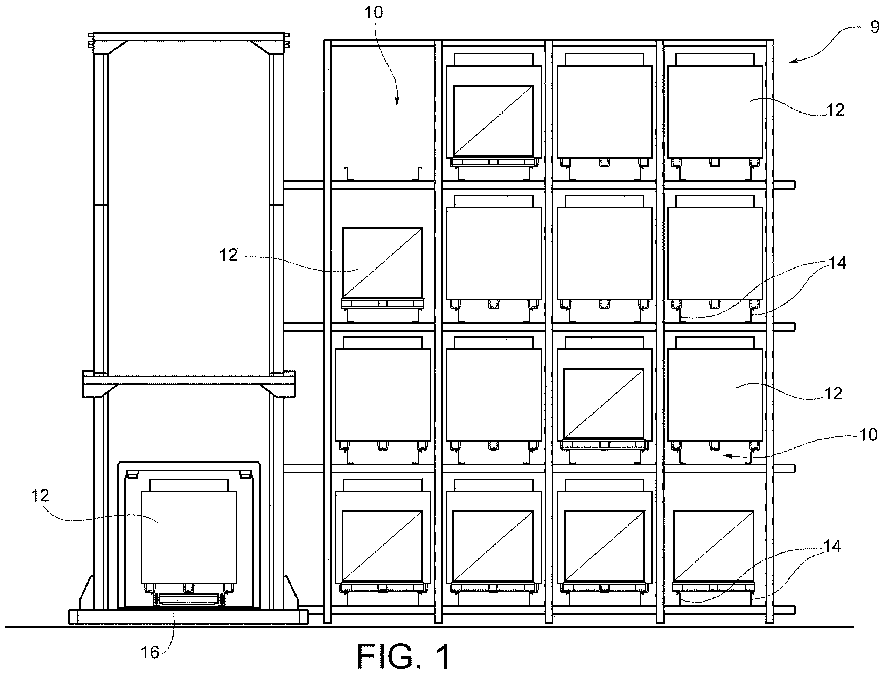

With initial reference to Fig. 1, the number 9 indicates as a whole an automated store for the storage of load units 12 at different temperatures. In this context, the expression "automated store" or "semi-automated store" indicates an automated or semi-automated system for the storage and retrieval of the load units 12.

The store 9 comprises a plurality of storage locations 10, each capable of housing at least one load unit 12. The load units 12 may be of the conventional (non-climate-controlled) type, or of the cooled and/or heated type, for the control and maintenance of a given optimal conservation temperature.

The storage locations 10 may be arranged with respect to one another in an ordered manner, in one-dimensional juxtaposition (that is to say, with the storage locations aligned in a single array), in two-dimensional juxtaposition (in a horizontal or vertical plane), or in three-dimensional juxtaposition (in a system of three orthogonal Cartesian axes, thus generating a block with a depth of two or more storage locations in the three directions).

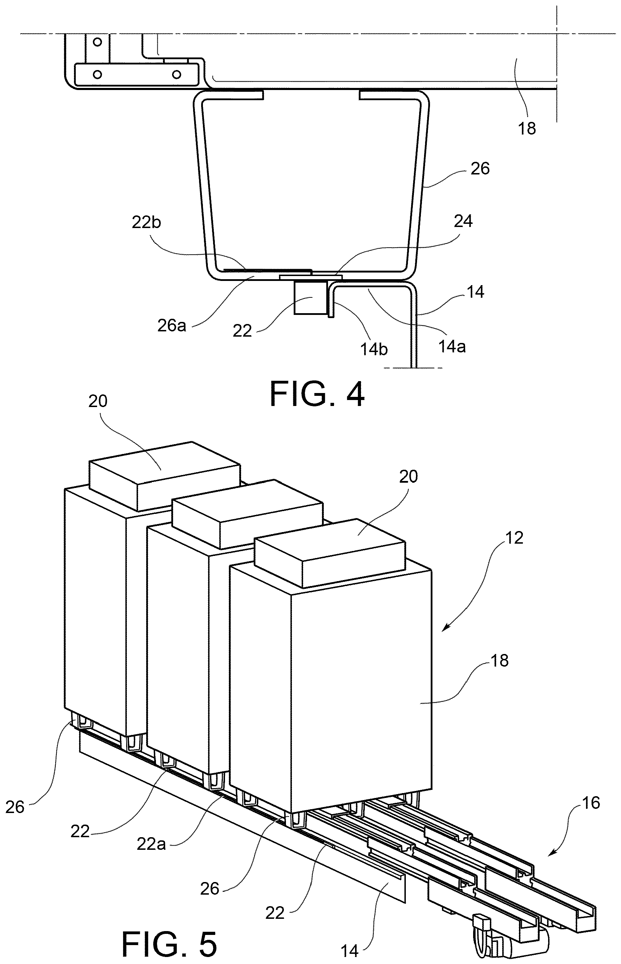

In an automated storage and retrieval system, the load units 12 can be stored in (or retrieved from) storage locations by handling means 16 of a known type, such as self-propelled vehicles (of the type known as "satellites"), or by telescopic forks (Fig. 5) associated with Cartesian rack feeders. In particular, the satellite may be associated with a self-propelled shuttle (not shown) as described, for example, in International patent application No. PCT/IB2014/060649, incorporated herein by reference.

According to an embodiment, in a storage and retrieval system of the semi-automated type, the handling means for transferring the load units from and towards the storage locations may be telescopic forks carried by conventional elevator trucks (not shown).

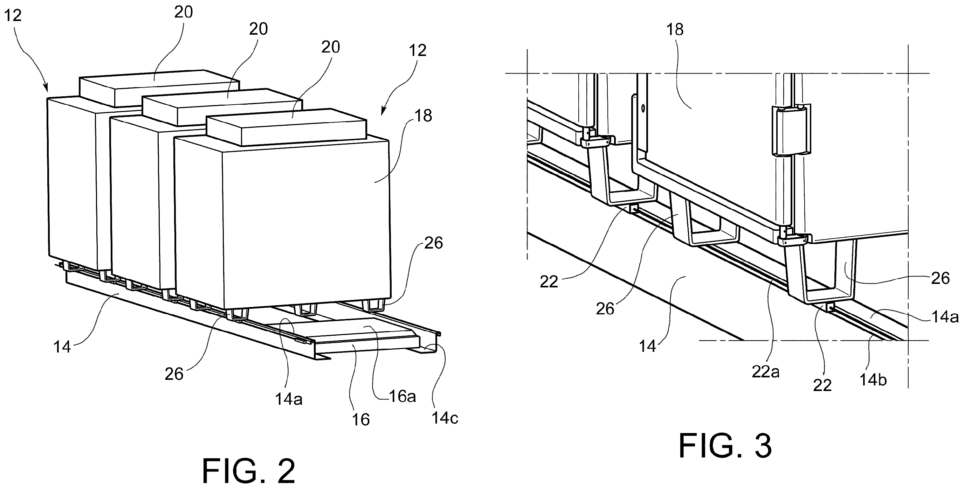

Fig. 2 shows a detail of the automated store 9 according to an embodiment in which the handling means 16 is a self-propelled vehicle (satellite) movable on projections 14c of horizontal support guides 14, which are arranged in pairs in such a way that all the storage locations 10 can be reached, for the purpose of supporting the load units 12.

The handling means 16 may be fitted with a liftable plate 16a adapted to carry the load units 12 during the storage or retrieval operations.

The load units, shown in Fig. 2, are of the cooled and/or heated type; these units comprise an outer casing 18 shaped so as to enclose, in a thermally insulated manner, an internal volume containing the goods to be stored. It is to be understood that each unit having an insulating casing is capable of ensuring the maintenance of a specified temperature level, regardless of the requirements of the other cooled and/or heated units that may be present in the store. Purely by way of example, the three load units shown in Fig. 2 may maintain internal temperatures which differ considerably from one another (it would be possible for a first load unit to maintain an internal temperature of -18°C, while a second maintains a temperature of +4°C, and a third load unit maintains a temperature of +60°C), because the present invention allows the greatest flexibility in terms of the determination of the conservation temperatures that may be required by the various load units within a single environment. Furthermore, the present invention allows cooled and/or heated load units to be alternated with conventional load units in the various storage locations.

The heated and/or cooled load units are each provided with a cooling or heating device 20 located, in a non-limiting embodiment shown in Fig. 2, on the top part of the casing 18 of the respective load unit.

According to another embodiment (not shown), the cooling or heating devices may be incorporated inside the casing 18 of the heated and/or cooled load unit. These devices are supplied with electrical power through the physical contact between two conductive elements (electrical contacts) 22 and 24, associated with the load unit and the support guide respectively.

Fig. 3 shows a detail of the portion of the store shown in Fig. 2, in which it may be seen that the load unit is supported on the guide 14 by supporting feet 26. The supporting feet 26 of each load unit may be present in variable numbers and types; that is to say, they may extend along all or part of the length of the side on which the load unit bears, instead of providing a support of the discrete type.

At each storage location 10, a stationary electrical contact 22 is associated with the guide 14. The stationary electrical contacts 22 associated with each location are connected to one another along the guide 14 by means of a conductor 22a.

As will be more readily understandable from Fig. 4, the horizontal support guide 14 is shaped so as to have a horizontal top surface 14a, capable of supporting the load unit by contact with a lower portion 26a of the supporting foot 26, and a vertical flange 14b, preferably contiguous with and perpendicular to the horizontal top surface 14a of the guide. The vertical flange 14b is associated with the stationary electrical contact 22 relating to the storage location 10 in question.

Preferably, the stationary electrical contact 22 is fixed to the vertical flange 14b.

In a preferred embodiment, the vertical flange 14b projects laterally or transversely from the guide 14. Conveniently, the stationary electrical contact 22 projects laterally or transversely from the vertical flange 14b.

According to a preferred but non-limiting embodiment of the invention, the supporting foot 26 of the heated and/or cooled load unit 12 incorporates a first electrical contact 24 which, by interfacing with the stationary electrical contact 22 fixed to the guide, supplies the cooling and/or heating device 20 of the respective load unit through a conducting element 22b.

In the embodiment illustrated herein, the first electrical contact 24 is incorporated into the lower portion 26a of the supporting foot 26 of the load unit, in the form of a conductive plate which draws electrical energy from the stationary contact 22 fixed to the guide 14, at the moment when the conductive plate and the external contact are superimposed.

To enable this superimposition to take place, the handling means 16 should be capable of positioning the load unit in the corresponding storage location in a sufficiently precise way to enable the stationary contact 22 and the first electrical contact 24 (fixed to the supporting foot) to be correctly aligned.

According to a preferred embodiment, the stationary electrical contact 22 provides a top surface positioned substantially flush with the horizontal top surface 14a of the guide, or slightly raised above the horizontal top surface 14a of the guide. This configuration ensures a physical contact and electrical conduction between the electrical contacts 22 and 24 when the load unit bears on the guide 14 by means of its supporting foot 26.

The geometry of the electrical contact is not a limiting feature, since other systems of interaction between the conductors fixed to the guide 14 and to the supporting foot 26 respectively may be provided, for example by plug and socket connections (not shown) or sliding contact connections (not shown).

Preferably, the first electrical contact 24, fixed to the load unit 12, is positioned on the outside of the supporting foot 26, but other configurations are not excluded.

Preferably, but not exclusively, the electrical contacts are of the low or very low voltage direct current type, with voltages preferably less than or equal to 120 V, or even more preferably less than or equal to 72 V.

The choice of handling means for moving the load units along the guides is not limited to the embodiment described herein (self-propelled satellite vehicles), but may include all the currently available solutions (automatic or semi-automatic), including the telescopic forks used in the example of Fig. 5 for the storage and retrieval of the load units 12.

These forks, commonly associated with shelving rack feeders or lift trucks (not shown), may be used for the bilateral frontal deposition of the load units in single, double or triple depths, depending on the number of elements which move (travel) relative to the fixed body, while satellite vehicles (possibly coupled to shuttles or shelving rack feeders, which are also not shown) may also be used with multiple depths.

The present invention therefore makes it possible to store different types of product, which require different conservation temperatures, within the same non-climate-controlled store.

The electrical power supply provided in all or part of the store area can be used to stabilize the temperatures of the containers over time and over a wide range of temperatures, which may be below zero or higher than the ambient temperature.

The flexibility of the system will also be appreciated, as it does not limit the use of the storage locations to climate-controlled load units only, but allows the use of the location for ordinary pallets or other goods having no external electrical contacts 24. If requirements vary over time, it will therefore be possible to interchange the positions of the load units, either among those requiring cooled and/or heated containers, or by storing ordinary goods which require no electrical power supply.

In conclusion, the automated or semi-automated storage and retrieval system with differentiated temperatures according to the present invention provides very high energy efficiency compared with an ordinary cooled and/or heated store, since the latter requires climate control of the whole volume, with a very high ratio between the cooled volumes and the cooled goods, resulting in high operating costs with lower flexibility.

Various aspects and embodiments of an automated or semi-automated storage and retrieval system according to the invention have been described. It is to be understood that each embodiment may be combined with any other embodiment. Furthermore, the invention is not limited to the embodiments described, but may be modified within the scope defined by the attached claims.

## Claims

1. An automated or semi-automated storage and retrieval system, comprising:
- a plurality of storage locations (10);
- a plurality of load units (12);
- a pair of horizontal support rails (14) at each storage location, for supporting at least one load unit (12);
- at least one handling means (16) for moving load units (12) to and from the storage locations (10);
wherein:
- at least some of the load units (12) are temperature controlled load units, each comprising a closed or closable container (18) with thermally insulating walls, a cooling device or a heating device (20), and a first electrical contact (24); and that
- at least some of the storage locations (10) are provided with a second, stationary electrical contact (22) configured for contacting the first electrical contact (24) of one of said load units (12) at a controlled temperature and supplying electrical power to the respective heating or cooling device (20);
**characterized in that** each temperature controlled load unit (12) includes at least one supporting foot (26) provided with said first electrical contact (24) and **in that** the guide (14) provides a horizontal upper surface (14a) for supporting the supporting feet (26), and a vertical flange (14b) adjacent to the horizontal surface (14a), wherein one of said stationary electrical contacts (22) is fixed to the flange (14b) in at least some of the storage locations (12).

2. A system according to claim 1, wherein the storage locations (10) are arranged in a linear or mono-dimensional arrangement, or in a two-dimensional arrangement, or in a three-dimensional arrangement.

3. A system according to claim 2, wherein the guides (14) extend between two or more consecutive storage locations (10).

4. A system according to claim 1, wherein the first electrical contact (24) is positioned and/or accessible on the outside of the respective temperature controlled load unit (12).

5. A system according to any one of claims 1 to 4, **characterized in that** the first electrical contact (24) is an electrically conductive plate incorporated in a lower portion (26a) of the supporting foot (26).

6. A system according to claim 1, **characterized in that** the vertical flange (14b) projects laterally or transversely from the respective guide (14).

7. A system according to claim 1, **characterized in that** the handling means (16) comprises a telescopic fork.

8. A system according to claim 1, **characterized in that** the handling means (16) comprises a self-propelled vehicle movable along the guides (14).

## Patentansprüche

1. Automatisiertes oder halbautomatisiertes Lager- und Abrufsystem, umfassend:
- eine Mehrzahl von Lagerpositionen (10),
- eine Mehrzahl von Beladungseinheiten (12),
- ein Paar von horizontalen Stützschienen (14) an jeder Lagerposition zum Stützen mindestens einer Beladungseinheit (12),
- mindestens eine Handhabungseinrichtung (16) zum Bewegen von Beladungseinheiten (12) zu und von den Lagerpositionen (10),
wobei
- mindestens einige der Beladungseinheiten (12) temperaturgesteuerte Beladungseinheiten sind, die jeweils einen geschlossenen oder verschließbaren Behälter (18) mit wärmeisolierenden Wänden, eine Kühlvorrichtung oder einer Heizvorrichtung (20) und einen ersten elektrischen Kontakt (24) umfassen, und
- mindestens einige der Lagerpositionen (10) mit einem zweiten stationären elektrischen Kontakt (22) ausgestattet sind, der zum Kontaktieren des ersten elektrischen Kontakts (24) von einer der Beladungseinheiten (12) bei einer gesteuerten Temperatur und zum Zuführen von elektrischem Strom zu der jeweiligen Heiz- oder Kühlvorrichtung (20) ausgebildet ist,
**dadurch gekennzeichnet, dass** jede temperaturgesteuerte Beladungseinheit (12) mindestens einen Stützfuß (26) umfasst, der mit dem ersten elektrischen Kontakt (24) versehen ist, und dadurch, dass
die Führung (14) eine horizontale obere Fläche (14a) zum Stützen des Stützfußes (26) und einen vertikalen Rand (14b) angrenzend an die horizontale Fläche (14a) umfasst, wobei einer der stationären elektrischen Kontakte (22) in mindestens einigen der Lagerpositionen (12) an dem Rand (14b) angebracht ist.

2. System nach Anspruch 1, bei dem die Lagerpositionen (10) in einer linearen oder eindimensionalen Anordnung oder in einer zweidimensionalen Anordnung oder in einer dreidimensionalen Anordnung angeordnet sind.

3. System nach Anspruch 2, bei dem sich die Führungen (14) zwischen zwei oder mehr aufeinander folgenden Lagerpositionen (10) erstrecken.

4. System nach Anspruch 1, bei dem der erste elektrische Kontakt (24) auf der Außenseite der jeweiligen temperaturgesteuerten Beladungseinheit (12) angeordnet und/oder zugänglich ist.

5. System nach einem der Ansprüche 1 bis 4, **dadurch gekennzeichnet, dass** der erste elektrische Kontakt (24) eine elektrisch leitende Platte ist, die in einen unteren Abschnitt (26a) des Stützfußes (26) einbezogen ist.

6. System nach Anspruch 1, **dadurch gekennzeichnet, dass** der vertikale Rand (14b) seitlich oder quer von der jeweiligen Führung (14) vorragt.

7. System nach Anspruch 1, **dadurch gekennzeichnet, dass** die Handhabungseinrichtung (16) eine Teleskopgabel umfasst.

8. System nach Anspruch 1, **dadurch gekennzeichnet, dass** die Handhabungseinrichtung (16) ein selbstfahrendes Fahrzeug umfasst, das entlang der Führungen (14) bewegbar ist.

## Revendications

1. Système de stockage et de récupération automatisé ou semi-automatisé, comprenant :
- une pluralité d'emplacements de stockage (10) ;
- une pluralité d'unités de chargement (12) ;
- une paire de rails de support horizontaux (14) à chaque emplacement de stockage, pour supporter au moins une unité de chargement (12) ;
- au moins un moyen de manutention (16) pour déplacer des unités de chargement (12) vers et depuis les emplacements de stockage (10) ;
dans lequel :
- au moins certaines des unités de chargement (12) sont des unités de chargement contrôlées en température, chacune comprenant un conteneur (18) fermé ou pouvant être fermé avec des parois thermo-isolantes, un dispositif de refroidissement ou un dispositif de chauffage (20), et un premier contact électrique (24) ; et en ce que
- au moins certains des emplacements de stockage (10) sont dotés d'un deuxième contact électrique, stationnaire (22) configuré pour mettre en contact le premier contact électrique (24) d'une desdites unités de chargement (12) à une température contrôlée et alimenter en courant électrique le dispositif de chauffage ou de refroidissement (20) respectif ;
**caractérisé en ce que** chaque unité de chargement (12) contrôlée en température comprend au moins un pied de support (26) doté dudit premier contact électrique (24) et **en ce que**
le guide (14) fournit une surface supérieure horizontale (14a) pour supporter les pieds de support (26), et une bride verticale (14b) adjacente à la surface horizontale (14a), dans lequel un desdits contacts électriques stationnaires (22) est fixé à la bride (14b) dans au moins certains des emplacements de stockage (12).

2. Système selon la revendication 1, dans lequel les emplacements de stockage (10) sont agencés dans un agencement linéaire ou monodimensionnel, ou dans un agencement bidimensionnel, ou dans un agencement tridimensionnel.

3. Système selon la revendication 2, dans lequel les guides (14) s'étendent entre deux ou plusieurs emplacements de stockage consécutifs (10).

4. Système selon la revendication 1, dans lequel le premier contact électrique (24) est positionné et/ou accessible sur l'extérieur de l'unité de chargement (12) contrôle en température respective.

5. Système selon l'une quelconque des revendications 1 à 4, **caractérisé en ce que** le premier contact électrique (24) est une plaque électriquement conductrice incorporée dans une partie inférieure (26a) du pied de support (26).

6. Système selon la revendication 1, **caractérisé en ce que** la bride verticale (14b) fait saillie latéralement ou transversalement du guide respectif (14).

7. Système selon la revendication 1, **caractérisé en ce que** le moyen de manutention (16) comprend une fourche télescopique.

8. Système selon la revendication 1, **caractérisé en ce que** le moyen de manutention (16) comprend un véhicule autopropulsé mobile le long des guides (14).
